# EUROPÄISCHE PATENTANMELDUNG

(11) **EP 1 452 215 A1**
(43) Veröffentlichungstag der Anmeldung: **01.09.2004**
(21) Anmeldenummer: 03405124.3
(22) Anmeldetag: 25.02.2003
(51) Int. Cl.: B01D 21/01, C02F 1/52, B01D 21/24, B01D 21/00

(54) **Vorrichtung sowie Verfahren zum Klären von mit Feststoffen beladenen Flüssigkeiten**

(71) Anmelder: Ammann Aufbereitung AG, 4901 Langenthal (CH)
(72) Erfinder: Müller Beat, 8716 Schmerikon (CH)
(74) Vertreter: Roshardt, Werner Alfred, Dipl.-Phys.

(57) **Zusammenfassung**

Die Vorrichtung zum Klären einer mit Feststoffen beladenen Flüssigkeit (24) hat einen Behälter (2) mit einem Zulaufsystem (27,31a,31b) für die zu klärende Flüssigkeit. Der Behälter hat eine vertikal verlaufende Behälterwände (11) aufweisende, obere Kammer (7) und eine sich nach unten verjüngende, untere Kammer (9). Aus einem unteren Bereich der unteren Kammer (9) sind sich absetzende Feststoffe (5) auslaßbar. Die obere Kammer (7) hat einen nach unten gezogenen Ringboden (19) und in ihrem oberen Randbereich einen Flüssigkeitsauslaufort (1) für im Behälter (2) von Feststoffen geklärte Flüssigkeit. Unter dem Ringboden (19) ist die zu klärende Flüssigkeit an zwei winkelmässig voneinander distanzierten Einlaßorten (32a,32b) des Zulaufsystems einleitbar. Die Vorrichtung hat ein Flüssigkeitsrückführrohr (36), mit dessen einer Rohreingangsöffnung (35) mehr oder weniger mit Feststoffen beladene Flüssigkeit an einem Entnahmeort innerhalb des Behälters (2) entnehmbar ist und dessen andere Rohrausgangsöffnung in das Zulaufsystem (27) eingeführt ist.

Mit der Vorrichtung ist es möglich, mit Feststoffen beladene Flüssigkeiten effizient mit einer geringen Menge von Flockungshilfsmitteln zu klären. Durch diesen "internen" Flüssigkeitstransport im Klärungsbehälter können bei einem Anlagetyp Zufluß und Abflussmenge immer gleich ausgelegt werden, auch wenn die eingeführte Trübedichte unterschiedlich ist.

## Beschreibung

### Technisches Gebiet

Die Erfindung betrifft ein Verfahren zum Klären von mit Feststoffen beladenen Flüssigkeiten in einem Behälter unter Einbringung eines Flockungshilfsmittels, wobei die mit Feststoffen beladene Flüssigkeit an einem Einlaßort unterhalb eines Ringbodens eingelassen wird. Die sich mit Hilfe des Flockungshilfsmittels im unteren Behälterteil absetzenden Feststoffe werden an einem Schlammablaßort und die gereinigte Flüssigkeit am oberen Behälterrand an einem Flüssigkeitsauslaßort ausgelassen werden.

Ferner betrifft die Erfindung eine Vorrichtung zum Klären von mit Feststoffen beladenen Flüssigkeiten mit einem Behälter mit einem Zulaufsystem für die zu klärende Flüssigkeit und mit einer vertikal verlaufende Behälterwände aufweisenden, oberen Kammer und mit einer sich nach unten verjüngenden, unteren Kammer, wobei aus einem unteren Bereich der unteren Kammer sich absetzende Feststoffe auslaßbar sind, und die obere Kammer einen nach unten gezogenen Ringboden und in ihrem oberen Randbereich einen Flüssigkeitsauslaßort für im Behälter von Feststoffen geklärte Flüssigkeit hat, und unter dem Ringboden die zu klärende Flüssigkeit an zwei winkelmässig voneinander distanzierten Einlaßorten des Zulaufsystems einleitbar ist.

### Stand der Technik

Aus der EP-A 0 158 714 ist ein Behälter zum Klären einer mit Feststoffen beladenen Flüssigkeit unter Verwendung von Flockungshilfsmitteln bekannt. Der Behälter hatte einen kreiszylindrischen oberen und einen konisch nach unten verjüngend zusammenlaufenden unteren Behälterteil. Im kreiszylindrischen Behälterteil war ein Ringboden mit einem gegen den unteren Behälterteil gerichteten Stutzen angeordnet. Die zu reinigende Flüssigkeit wurde unterhalb des Ringbodens mit zwei winkelmässig voneinander distanzierten Rohröffnungen eingebracht. Am oberen Rand des kreiszylindrischen Behälterteils war ein Überlauf angeordnet, über den die geklärte Flüssigkeit abfloss.

### Darstellung der Erfindung

### Aufgabe

Aufgabe der Erfindung ist es, eine Verfahren sowie ein Vorrichtung zum Klären von mit Feststoffen beladenen Flüssigkeiten zu schaffen, mit dem bzw. mit der eine effiziente Klärung mit einer möglichst geringen Flockungshilfsmittelmenge möglich ist.

### Lösung

Die Lösung der Aufgabe betreffend des Verfahrens erfolgt durch die Merkmale des Patentanspruchs 1 bzw. betreffend der Vorrichtung durch die Merkmale des Patentanspruchs 4. Bevorzugte Aufgaben und Ausführungen werden durch die abhängigen Patentansprüche gelöst.

Zur Lösung der Aufgabe wird erfindungsgemäss eine mit Feststoffen beladene Flüssigkeit zum Klären in einen Behälter unter Zugabe von Flockungshilfsmitteln eingebracht. Die mit Feststoffen beladene Flüssigkeit wird an einem Einlassort unterhalb eines Ringbodens eingelassen. Die sich mit Hilfe des Flockungshilfsmittels im unteren Behälterteil absetzenden Feststoffe werden dann an einem Schlammablaßort und die gereinigte Flüssigkeit am oberen Behälterrand in einem Flüssigkeitsauslaßort ausgelassen. Ein Konzentrationsausgleichsflüssigkeitsfluss wird an einem vorgegebenen Entnahmeort innerhalb des Behälters, der vom Einlaßort und den Auslassorten distanziert ist, entnommen. Je nach Entnahmeort ist die Konzentrationsausgleichsflüssigkeit bereits teilweise geklärt, d.h. noch mit mehr oder weniger Feststoffen als die am Einlaßort eingelassene Flüssigkeit beladen. Die Konzentrationsausgleichsflüssigkeit wird dann an einem Zuführort wieder zugegeben, an dem eine andere Feststoffkonzentration als am Entnahmeort herrscht.

Durch diesen "internen" Flüssigkeitstransport im Klärungsbehälter können bei einem Anlagetyp Zufluß und Abflussmenge immer gleich ausgelegt werden, auch wenn die eingeführte Trübedichte unterschiedlich ist. Es kann somit vereinfacht ausgedrück eine Standardanlage gebaut werden, wobei lediglich die Rückführung an den Trübegehalt angepasst werden muss. Diese Anpassung kann auf einfache Art und Weise bei einer bereits installierten Anlage vorgenommen werden, falls sich der Trübegehalt signifikant ändern sollte. Auf eine hardwaremässige Änderung der Vorrichtung kann allerdings verzichtet werden, sofern die Trübegehaltänderung in einem vorgegebenen Bereich bleibt, der durch eine Steuerung der Rückflussmenge beherrschbar ist. Mit der Konzentrationsausgleichsflüssigkeit kann je nach Entnahme- und Rückführungsort eine Eindickung oder eine Verdünnung erreicht, und damit eine bessere Wirkung des Flokkungshilfsmittels, wie unten ausgeführt, erreicht werden. Die Abnahme der Konzentrationsausgleichsflüssigkeit und deren Rückführung wird man derart vornehmen, dass dadurch der Sedimentationsprozess nicht oder nur geringfügigst gestört wird.

Die Entnahme und Rückführung erfolgt an voneinander distanzierten Ort; ansonsten gäbe es ja keine Dichteunterschiede von zu klärenden Feststoffen.

Die zur Durchführung des Klärverfahrens verwendete erfindungsgemässe Vorrichtung weist einen Behälter mit einem Zulaufsystem für die zu klärende Flüssigkeit auf. Der Behälter hat eine obere und eine untere Kammer. Die obere Kammer hat vertikal verlaufende Behälterwände und die untere Kammer sich nach unten verjüngende Behälterwände. Aus dem unteren Bereich der unteren Kammer sind die sich absetzenden Feststoffe auslaßbar. Die obere Kammer hat in ihrem oberen Randbereich einen Flüssigkeitsauslaßort für im Behälter von Feststoffen geklärte Flüssigkeit und einen nach unten gezogenen Ringboden. Unter dem Ringboden ist die zu klärende Flüssigkeit an zwei winkelmässig voneinander distanzierten Einlaßorten eines Zulaufsystems einleitbar.Es ist ein Flüssigkeitsrückführrohr vorhanden. Das Ausgleichsrohr hat eine Rohreingangsöffnung an seinem einen Rohrende. Die Rohreingangsöffnung ist unterhalb des Ringbodens an einem Ort angeordnet, an dem zum Einlaßort eine unterschiedliche Feststoffkonzentration herrscht. Durch diese Rohreingangsöffnung ist die Flüssigkeit mit der "Ortskonzentration" entnehmbar und den Zulaufsystem in einem internen Kreislauf wieder zuführbar. Der Flüssigkeitsfluss in diesem internen Kreislauf wirkt sich nicht auf den Flüssikgkeitsein- bzw. -auslaß in den bzw. aus dem Behälter aus. Der Einlauffluss ist immer gleich dem Auslauffluss (bis auf die gelegentlich abgezogene "Schlammmenge"), gleichgültig wie gross der Flüssigkeitsfluss im internen Kreislauf ist. Der Ringboden, der, wie unten beschrieben, eine zentrische Öffnung hat, stellt eine gewisse Trennung zwischen stark verschmutzter und gereinigter Flüssigkeit dar. Durch diese zentrische Öffnung strömt unabhängig vom Flüssigkeitsfluss im Flüssigkeitsrückführrohr die Flüssigkeitsmenge aus, die eingelassen wird. Das Flüssigkeitsrückführrohr entnimmt nämlich Flüssigkeit aus dem Bereich unterhalb des Ringbodens und die entnommene Flüssigkeit wird wieder in das Zulaufsystem zurückgegeben.

Kläranlagen können somit unter Vorgabe einer zu klärenden Flüssigkeitsmenge immer gleich ausgelegt werden, lediglich die Flüssigkeitsausgleichsmenge muss in Abhängigkeit des Verschmutzungsgrades, d.h. der Konzentration von Feststoffen geändert werden. D.h. lediglich ein System bestehend aus Flüssigkeitsrückführrohr und dazugehörender Umwälzpumpe muss dem Verschmutzungsgrad angepasst werden.

Um den vertikalen Flüssigkeitsstrom durch die zentrische Öffnung des Ringbodens nicht zu beeinflussen, sollte die Ansaugöffnung des Flüssigkeitsrückführrohres sich auf annähernd dem gleichen horizontalen Niveau (bis auf eine Abweichungstoleranz) wie das Einlassrohr bzw. die Einlassrohre befinden.

Das Zulaufsystem der zu klärenden Flüssigkeit hat einen im oberen Bereich der oberen Kammer angeordneten Einlaufkasten. Dieser Einlaufkasten ist mit den Einlaßorten unterhalb des Ringbodens flüssigkeitsmässig verbunden. Der Ringboden ist nach unten, einen noch oben geschlossenen Unterraum bildend, herabgezogen und an den Innenwänden der oberen Kammer, in der Regel annähernd fluiddicht, befestigt. Die Rohreingangsöffnung des Flüssigkeitsrückführrohrs ist im Unterraum angeordnet und die Rohrausgangsöffnung in den Einlaufkasten geführt. Wird das Flüssigkeitsrückführrohr direkt in den oben liegenden Einlaufkasten geführt, werden mit der Konzentrationsausgleichsflüssigkeit auch Gase (Luft, Faulgase, ...) aus dem Unterraum abgesogen. Auf ein separates Entgasungsrohr kann somit verzichtet werden.

Das Flüssigkeitsrückführrohr wird innerhalb der oberen Kammer geführt und nicht, wie beim Stand der Technik üblich aussen am Behälter. Das sieht gut aus und gibt der Vorrichtung (Kläranlage) ein kompaktes Aussehen. Hauptgrund dieser Anordnung ist jedoch nicht das gute Aussehen, sondern eine eingesparte Wärmeisolation für ein bzw. mehrere aussen geführte Rohre bei Winterbetrieb. Vorzugsweise wird das Flüssigkeitsrückführrohr in unmittelbarer Nähe der vertikal verlaufenden Innenwand der oberen Kammer geführt. Die geringfügige Distanzierung ist notwendig, um eine gute Reinigung zu gewährleisten. "Dreckecken" sollten vermieden werden. Die vertikal verlaufenden Rohre müssen jedoch nicht im Bereich der Innenwand geführt werden; sie können an jedem anderen Ort und somit auch zentrisch zusammen mit einer unten erwähnten Antriebswelle für einen Schlamm-Rührrahmen geführt werden. Hierdurch ergibt sich eine einfachere Ausführung eines die Oberseite des Ringbodens reinigenden umlaufenden Räumers.

Das Zulaufsystem hat einen im oberen Bereich der oberen Kammer angeordneten Einlaufkasten. Der Einlaufkasten wird derart angeordnet, dass sein Niveau höher ist als dasjenige des Auslasses für die geklärte Flüssigkeit bzw. eines Überlaufes am oberen Rand der oberen Kammer. Durch den hydrostatischen Druck wird dann nämlich die Flüssigkeit durch die Vorrichtung (und die Öffnung im Ringboden) "getrieben". Der Einlaufkasten kann nun seitlich an der Innenseite der oberen Kammer oder auch mittig (neben dem Antrieb der Welle für den Schlamm-Rührrahmen oder über diesem) angeordnet werden.

Vom Boden des Einlaufkastens ausgehend kann nun nur ein einziges Flüssigkeitszulaufrohr bis unterhalb des Ringbodens geführt und dort dann in zwei Teilrohre aufgeteilt werden, deren Rohrenden an der Kammerinnenwand der oberen Kammer voneinander distanziert unter einem vorgegebenen Zentriwinkel enden. Die aus beiden Rohrenden ausströmende Flüssigkeit verläuft zwar im ersten Augenblick als rotierende Strömung; die beiden Strömungen kompensieren sich jedoch, da sie eine zueinander entgegengesetzte Strömungsrichtung aufweisen.

Anstelle eines einzigen Rohres, welches später in zwei Teilrohre aufgeteilt wird, können vom Boden des Einlaufkastens ausgehend auch gleich zwei Rohre vertikal nach unten verlaufend und dann unterhalb des Ringbodens entsprechend abgewinkelt angeordnet werden. Werden zwei voneinander getrennte Flüssigkeitszulaufrohre verwendet, so können diese gegenüber einem einzigen dünner ausgeführt werden. Sie sind dadurch leichter verlegbar und stören die Flüssigkeitsbewegungen weniger.

Die Aussenseite der sich verjüngenden unteren Kammer ist beheizbar. Vorzugsweise zieht man die vertikal verlaufende Wand der oberen Kammer über die unteren Kammer nach unten bis zur Standfläche des gesamten Behälters nach unten. Es bildet sich dann ein Raum zwischen der herunter gezogenen Wand der oberen Kammer und der sich verjüngenden Wand der unteren Kammer. In diesem Raum können Installationen und Messeinrichtungen für die Klärung untergebracht werden. Man kann aber auch noch eine Heizung unterbringen, die derart ausgelegt wird, dass ein Winterbetrieb der Vorrichtung problemlos möglich ist. Um mit der in diesem Raum angeordneten Heizung auch den Einlaufkasten beheizen zu können, wird ein Rohr durch die beiden Kammern hindurch derart nach oben gezogen, dass in ihm warme Luft aufsteigen und Boden und Aussenwand des Einlaufkastens umflutet werden. Durch dieses aufsteigende Rohr kann auch die obere Kammer noch erwärmt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen
- Fig. 1: einen Längsschnitt durch die erfindungsgemässe Vorrichtung,

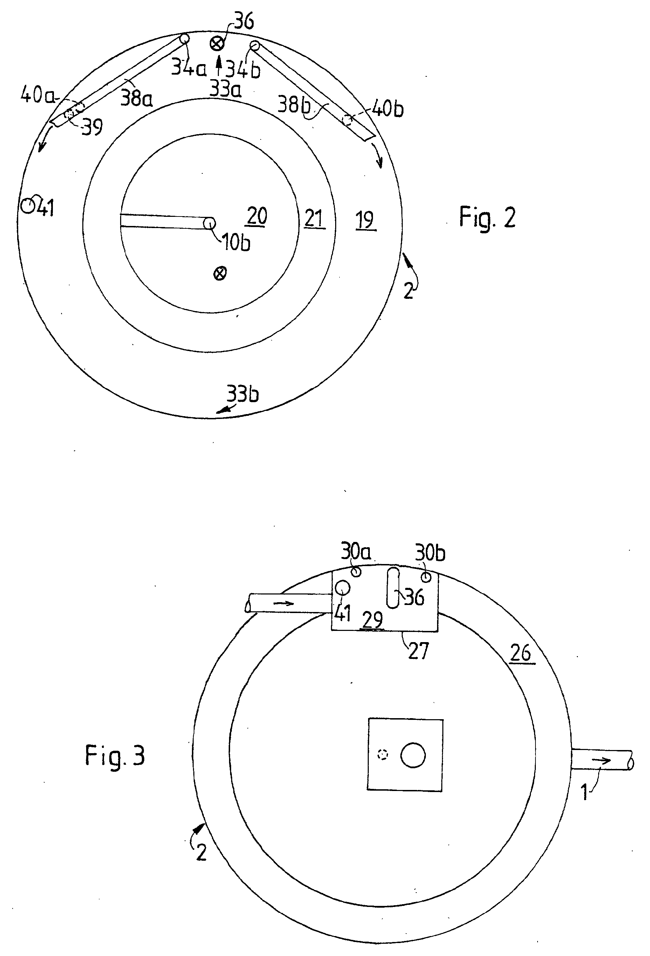

- Fig. 2: einen Querschnitt durch die in **Figur 1** dargestellte Vorrichtung entlang des dortigen Schnittes II - II und,
- Fig. 3: eine Draufsicht auf die in **Figur 1** dargestellte Vorrichtung in der dortigen Blickrichtung III.

Grundsätzlich sind in den Figuren gleiche Teile und Elemente mit gleichen Bezugszeichen versehen.

### Wege zur Ausführung der Erfindung

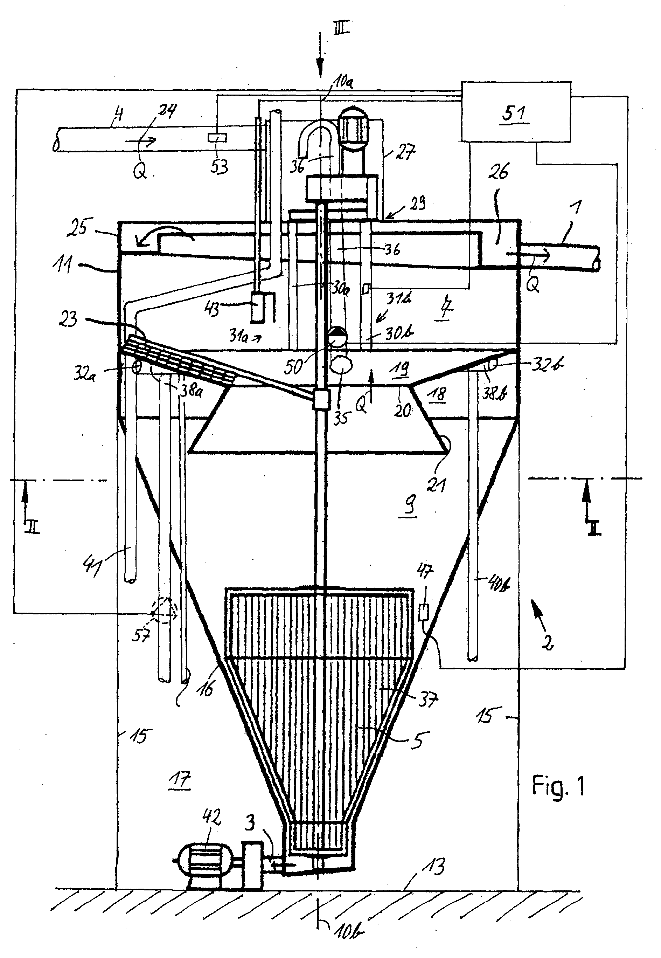

Die in **Figur 1** in einem schematischen Längsschnitt dargestellte erfindungsgemässe Vorrichtung zum Klären von mit Feststoffen beladenen Flüssigkeitsmenge **Q** hat einen vertikal stehenden Behälter **2**. Der Behälter hat ein Zulaufsystem für die zu klärende Flüssigkeit, einen Auslauf **1** für die geklärte Flüssigkeitsmenge **Q** sowie im unteren Behälterteil einen Auslass **3** für die sedimentierten Feststoffe (Schlamm) **5**. Das Zulaufsystem hat eine nicht dargestellte Pumpe zur Förderung der beladenen Flüssigkeit durch ein Eingangsrohr **4**, einen Einlaufkasten **27**, in den das Eingangsrohr **4** mündet, und wenigstens ein Zuführrohr, hier jedoch beispielsweise zwei Zuführrohre **31a** und **31b**. Mit der (nicht dargestellten) Pumpe wird die zu klärende Flüssigkeit in den oben am Behälter angeordneten Einlaufkasten **27** gefördert und infolge des hydrostastischen Druckes durch die Zuführrohre **31a** und **31b** an einen vorgegebenen, unten beschriebenen Ort innerhalb des Behälters **2** gebracht.

Der Behälter 2 hat eine obere und eine untere Kammer **7** und **9**. Die obere Kammer **7** hat einen kreiszylindrischen Querschnitt mit einer vertikal verlaufenden Mantelwand **11**. Die untere Kammer **9** ist unterhalb der oberen Kammer **7** angeordnet und mit dieser fluiddicht verbunden. Die untere Kammer **9** hat ebenfalls einen kreiszylindrischen Querschnitt, der sich nach unten zum Schlammauslass **3** hin verjüngt. Die vertikal verlaufende Achse **10a** der oberen Kammer **7** fluchtet mit der ebenfalls vertikal verlaufenden Achse **10b** der unteren Kammer **9**. Die kreiszylindrische Aussenwand **11** der oberen Kammer **7** ist über die untere Kammer **9** hinweg bis zur Standfläche **13** des Behälters **2** gezogen. Zwischen dieser herunter gezogenen Aussenwand **15** und der sich verjüngenden Aussenwand **16** der unteren Kammer **9** ergibt sich somit ein Ringraum **17**.

An der Innenwand der unteren Kammer **9** ist ein Ringboden **19** mit einer zentrischen Öffnung **20** befestigt. Mit dem Ringboden **19** erfolgt eine Zweiteilung des Behälterinnenraums. Durch die Öffnung **20** fliesst, wie unten erklärt, die Flüssigkeitsmenge **Q** entsprechend der Flüssigkeitsmenge **Q** im Eingangsrohr **4**. Der Ringboden **19** ist zur Öffnung **20** hin nach unten gezogen. Es ist somit unterhalb des Ringbodens **19** ein nach oben abgedeckter Unterraum **18** vorhanden. Am Öffnungsrand ist ein nach unten gerichteter umlaufender Stutzen **21** angeordnet. Die "Seitenwände" des Unterraums **18** bilden somit die Kammerinnenwand und der Stutzen **21**. Auf dem Ringboden **19** ist ein umlaufender Räumer **23** angeordnet.

Etwas unterhalb des oberen Rands **25** der oberen Kammer **7** ist ein Überlauf **26** angeordnet, der in den Flüssigkeitsauslauf **1** mündet. Oberhalb des oberen Rands **25** ist ein Einlaufkasten **27** angeordnet, in den die zu klärende Flüssigkeit **24** eingeleitet wird. Der Einlaufkasten **27** hat einen Kastenboden **29**, von dem aus zwei Flüssigkeitszuführrohre **31a** und **31b** unter den Ringboden **19** geführt werden, wobei die Ausgänge **32a** und **32b** dieser beiden Rohre **31a** und **31b** an der Innenseite der Kammerwand **11** der oberen Kammer **7** unter einem Zentriwinkel von hier beispielsweise etwa 120 ° zu liegen kommen. Jedes Zuführrohr **31a, 31b** hat eine vertikal verlaufende erste Flüssigkeitsteilzuführung mit einem vertikal verlaufenden Rohrteilstück **30a** bzw. **30b**. Diese Rohrteilstücke **30a** und **30b** gehen über einen 90°-Krümmer **34a** bzw. **34b** in eine annähernd horizontal verlaufende zweite Flüssigkeitsteilzuführung mit einem horizontal liegenden Rohrstück **38a** bzw. **38b** über. Die zwei Rohrausgänge **32a** und **32b** der beiden Rohrstücke **38a** und **38b** enden derart, dass die austretende Flüssigkeit radial entlang der Behälterinnenwand **11** fliesst. Die aus den Rohrausgängen **32a** und **32b** ausströmende zu klärende Flüssigkeit aus den Einlaufkasten **27** ergibt zwei radiale Strömungen, welche sich aber aufheben. Diese beiden Strömungen heben sich exakt an einem Ort **33a** der gegenüberliegenden Innenwandseite auf, den die Winkelhalbierende **w** des Zentriwinkels α durch die Achse **10a** trifft. Am Ort **33** ist eine Rohreingangsöffnung **35** eines Flüssigkeitsrückführrohres **36** angeordnet, welches über eine Pumpe **50** bis in den Einlaufkasten **27** zurückgeführt ist. Die Feststoffkonzentration ist am Ort **33a**, da bereits ein Absetzen gemäss unten erläutertem Klärprozess erfolgt ist, ist geringer als an den Ausgängen **32a** und **32b**. Es wird somit Flüssigkeit mit einen geringeren Feststoffgehalt in den Einlaufkasten **27** zurückgeführt; d.h. es erfolgt eine Verdünnung. Das Flüssigkeitsrückführrohr **36** kann auch derart verlegt werden, dass am Ort **33b** Flüssigkeit entnommen wird.

Die zu reinigende Flüssigkeit führt immer Luft mit, auch können sich Faulgase bilden. Diese beiden Gase können sich nun unterhalb des Ringbodens **19** ansammeln. Die sich hier ansammelnden Gase würden den Klärvorgang in der Vorrichtung stören. Auf eine separate Abführung beispielsweise durch ein Entlüftungsrohr kann jedoch hier verzichtet werden, da die Gase über das Flüssigkeitsrückführrohr 36 abgesaugt und zum Einlaufkasten **27** wegtransportiert werden und dort entweichen.

Zum Aufbereiten von mit Feststoffen beladenen Flüssigkeiten sind verschiedene Verfahren bekannt. Bei dem hier beschriebenen Verfahren werden die in der Flüssigkeit suspendierten Feststoffe durch Einwirkung der Schwerkraft aus der Flüssigkeit entfernt. Zur Verbesserung dieses Trennvorganges werden zusätzlich Flockungshilfsmittel als Koagulationsmittel zugegeben. Es erfolgt eine Zusammenballung der Feststoffe, die wegen ihrer grösseren Masse sich schneller absetzen als die unkoagulierten.

Ein Flockungshilfsmittel kann nun im Einlaufkasten **27**, in einem oder beiden Zuführrohren **31a** und/oder **31b**, durch einen separaten Auslass zwischen den beiden Zuführrohren **31a** und **31b** unterhalb des Ringbodens **19** oder in das Flüssigkeitsrückführrohrs **36** zugegeben werden. Das Flockungshilfmittel gibt man in der Regel an Orten einer hohen Feststoffkonzentration zu. Die Feststoffkonzentration sollte jedoch nicht allzuhoch sein, damit eine gute Durchmischung mit den Flockungshilfsmittel erreicht wird. Die gute Durchmischung wird durch die Rückführung von bereits teilweise geklärter Flüssigkeit durch das Flüssigkeitsrückführrohr **36** erreicht. Das Flockungshilfsmittel wird hier beispielsweise durch in die Rohre **38a** und **38b** mündende Zuführrohre **40a** und **40b**, welche aus dem Ringraum **17** kommen, gegeben.

Im unteren Teil der sich konisch verjüngenden unteren Kammer **9** ist ein um die Achse **10b** rotierender Rührrahmen **37** angeordnet. Der Rührrahmen **37** hat ein Gitter mit mehreren vertikal angeordneten Stäben (Drähte, Seile, ...). Die sich im unteren Teil der Kammer **9** absetzenden Feststoffe werden durch den Rührrahmen **37** in einem pumpfähigen Zustand gehalten, damit sie am Auslass **3** entweder durch den hydrostatischen Druck ausgelassen oder mit einer Pumpe **42** abgepumpt werden können.

Die Zuführrohre **31a** und **31b**, das Rohr für das Flockungshilfsmittel und das Flüssigkeitsrückführrohr **36** wird man vorzugsweise im Inneren des Behälters führen, um auf eine Wärmeisolation für einen Winterbetrieb verzichten zu können. Die Rohre können nun zentrisch geführt werden oder an der Innenwand der oberen Kammer **7**.

Die Feststoffdichte der Flüssigkeit wird an mehreren Orten festgestellt. Im Bereich des Auslasses wird mit einem Sensor **43** eine Kontrollmessung vorgenommen. Diese Kontrollmessung kann jedoch nicht zur Steuerung des Prozesses verwendet werden. Die am Ort des Sensors **43** befindliche Flüssigkeit hat bereits den ganzen Klärprozess durchlaufen; aufgrund dieser Messwerte einzugreifen, ist somit zu spät. Sollten diese Messwerte ein Überschreiten der Festkörperdichte anzeigen, kann die Anlage nur noch abgeschaltet werden.

Eine Steuerung des Prozesses (Zugabe von Flockungshilfsmitteln) wird durch eine Probenentnahme mit einem Messrohr **39** an einem der unterhalb des Ringbodens **19** liegenden Zuführrohre **38a** oder **38b** vorgenommen. Im Bereich des Rührrahmens **37** ist ein weiterer Sensor **47** einer Messvorrichtung vorhanden, mit der der Zeitpunkt des Schlammablassens bestimmbar ist und von der auch Rückschlüsse auf den Absetzprozess ziehbar sind. Der Sensor **47** ist in **Figur 1** frei in der Flüssigkeit dargestellt; er kann aber auch direkt an der Innenwand befestigt sein.

Für eine automatische Steuerung der Vorrichtung wird man eine Steuereinrichtung 51 und mit dieser elektrisch verbundene weitere Trübedichtesensoren **53** und **55** vorsehen. Der Trübesensor **53** ist im Eingangsrohr **4** und der Trübedichtesensor **55** in einem der Zuführrohre **31a** oder **31b** (hier im vertikal verlaufenden Rohr **30b**) angeordnet. Die Steuereinrichtung ist ferner über Signalleitungen mit den Sensoren **43** und **47** sowie mit der Pumpe **50** verbunden. Die Fördermenge der Pumpe **50** wird nun durch die Steuereinrichtung **51** in Abhängigkeit der mit dem Sensor **53** gemessenen Trübedichte eingestellt. Eine hohe Trübedichte ergibt eine höhere Fördermenge als eine niedrige. Eine Feinregelung der Fördermenge erfolgt durch die Messung des Sensors **55**. Auch die Menge des Flockungshilfsmittels kann durch eine von der Steuereinrichtung **51** gesteuerte Pumpe **57** (gestrichelt in **Figur 1** eingezeichnet) in Abhängigkeit der Messwerte der Sensoren **53** und **55** zugeführt werden.

Der Ringraum **17** und damit die Aussenseite **16** der sich verjüngenden, unteren Kammer **9** ist beheizbar, um einen Winterbetrieb zu ermöglichen. Vom Ringraum **17** als Heizraum verläuft bis zur Aussenwand des Einlaßkastens **27** ein Steigrohr **41** durch die obere und untere Kammer **7** und **9**. Das Steigrohr **41** wird in den beiden Kammers **7** und **9** vorzugsweise in unmittelbarer Nähe von deren Innenwand geführt. Durch das Steigrohr **41** fliesst Wärme aus dem beheizten Heizraum **17** bis zum Einlaufkasten **27**. Das Steigrohr kann in einer Ausführungsvariante auch durch den Einlaufkasten **27** hindurchgeführt werden. Die durch das Steigrohr fliessende warme Luft heizt die Flüssigkeit im Behälter **2** für einen Winterbetrieb.

Anstelle nur eines einzigen Ringbodens können selbstverständlich mehrere Ringböden übereinander angeordnet werden. Mehrere Ringböden werden bei einem grösseren Volumen von zu reinigender Flüssigkeit verwendet werden; auch ist dann die obere Kammer **7** höher ausgebildet.

Das Flüssigkeitsrückführrohr **36** muss nicht bis in den Einlaufkasten **27** zurückgeführt werden; es reicht auch eine Rückführung bis in das bzw. die Zuführrohre **38a** und **38b**. Die Rückführung sollte jedoch strömungsmässig vor der Zugabe des Flockungshilfsmittels erfolgen.

Die Verwendung eines oder mehrerer Ringböden ist nicht zwingend, es kann auch ohne Ringböden gearbeitet werden. Wird ein oder mehrere Ringböden verwendet ergibt sich allerdings bei gleichen Dimensionen des Klärbehälter eine verbesserte Trennung zwischen geklärter und ungeklärter Flüssigkeit. Es kann jeder Ringboden ohne Stutzen ausgebildet sein. Der Stutzen trägt jedoch u.a. zur schnelleren Sedimentation bei.

Die Flüssigkeitsentnahme zur Verdünnung wird, wie oben geschildert, an einem Ort **33** an der gegenüberliegenden Innenwandseite entnommen, an dem die Winkelhalbierende **w** des Zentriwinkels α den die beiden Rohrausgänge **31a** und **31b** miteinander einschliessen durch die Achse **10a** auf die gegenüberliegende Innenwand trifft. Eine Flüssigkeitsentnahme kann aber auch am Fusspunkt dieser Winkelhalbierenden, also zwischen den beiden Rohrausgängen **32a** und **32b**, also zwischen den Rohrkrümmern **34a** und **34b** vorgenommen werden. Vorteil dieser Anordnung ist eine Bündelung sämtlicher an der Innenseite des Behälters **2** zu führender Rohre.

Eine Abnahme der rückzuführenden Flüssigkeit kann auch an anderen Orten erfolgen, wie beispielsweise auch oberhalb des Ringbodens oder bei mehren Ringböden an jedem Ringboden. Es kann Flüssigkeit für eine Rückführung unmittelbar neben dem Einlaufkasten **27** entnommen werden. Diese Entnahmevariante hat den Vorteil eines sehr einfach gestalteten Flüssigkeitsrückführsystems, jedoch den Nachteil, dass hierdurch der Flüssigkeitsfluss in Abhängigkeit von der Flüssigkeitsrückführung durch die Öffnung **20** sich ändert und damit sich auch die Sedimentationseigenschaften der Vorrichtung ändern.

Die obere Kammer 7 wie auch die untere Kammer **9** müssen keinen kreisförmigen Querschnitt aufweisen. Die Querschnitte können beliebig sein; also oval, rechteclig, quadratisch oder vieleckig.

Die Ausgänge **32a** und **32b** der Rohrstücke **38a** und **38b** der Zuführrohre **31a** und **31b** sind in dem oben beschriebenen Ausführungsbeispiel annähernd in einer horizontal liegenden Ebene angeordnet, wobei der Ausfluss horizontal an der Innenwand der Kammer **7** "entlang streichend" erfolgt. Dies ist jedoch nicht zwingend. Die Rohrstükke **38a** und **38b** können gegenüber der Horizontalen geneigt angeordnet werden; auch müssen sie nicht gleiche Neigungswinkel haben. Werden die Rohrstücke **38a** und **38b** geneigt, so ist abzuklären, ob mit dieser Anordnung auch gleichzeitig, wie oben beschrieben, eine Entlüftung des Unterraums **18** erfolgt; wenn nicht, muss ein separates Entlüftungsrohr installiert werden. Die oben anfänglich beschriebene Ausführungsvariante liefert jedoch gute Sedimentationsergebnisse bei minimalem Flockungshilfsmittelverbrauch.

Das Steigrohr **41** zur "Heizung" muss nicht wie in **Figur 1** dargestellt verlaufen. Es muss nur aus dem Ringraum **17** (Heizraum) kommend durch die Flüssigkeit in den Kammern **7** und **9** bis zum oder durch den Einlaufkasten **27** geführt werden. Das Steigrohr **41** kann neben dem Transport warmer Luft auch zur Führung von Signal und Versorgungsleitungen verwendet werden.

Sämtliche Rohre - Zuführrohr bzw. Zuführrohre **31a** und **31b,** Flüssigkeitsrückführrohr **36**, Zuführrohre **40a** und **40b** für Flockungshilfsmittel, Steigrohr **39** für eine Probenentnahme - verlaufen innerhalb der Kammern **7** und **9**. Eine derartige Anordnung bietet beim Winterbetrieb den Vorteil einer nicht notwendigen Wärmeisolation. Auf diesen Vorteil kann jedoch verzichtet werden und die Rohre können an der (freien) Aussenwand des Behälters **2** geführt werden.

Zur Verdeutlichung der Klärung ist nachfolgend ein Beispiel angeführt:

In einem Kieswerk sei ein Schmutzwasseranfall (mit Feststoffen beladene Flüssigkeit) von 200 m³/h vorhanden. Der Feststoffanteil betrage 120 g/l. Durch das Flüssigkeitsrückführrohr **36** sollen 100 m³/h gepumpt werden. Der Feststoffanteil der am Ort **33a** bzw. **33b** entnommenen Flüssigkeit ist gering und wird in diesem vereinfachen Beispiel mit "0 g/l" veranschlagt. Durch die Zuführrohre **31a** und **31b** strömen nun zusätzlich die 100 m³/h des internen Kreislaufs, welche sich zu den 200 m³/h Schmutzwasseranfall addieren. Durch die Zuführrohre **312a** und **31b** strömen jetzt 300 m³/h. Der Anteil Feststoffe in der durch die Zuführrohre **31a** und **31b** transportierten Flüssigkeit hat sich hierdurch allerdings auf 80 g/l verringert [Eine Zugabe von 1/3 Flüssigkeitsfluss ohne Feststoffe ergibt eine Verringerung des Gesamtfeststoffanteils um 1/3]. Der Flüssigkeitsfluss durch die Öffnung **20** hat sich durch die Flüssigkeitsrückführung jedoch nicht geändert und ist weiterhin **Q**. Durch die Verdünnung infolge der Rückführung, mit der zudem auch Flockungshilfsmittel rückgeführt werden, ergibt sich eine signifikante schneller Sedimentation bei einem verringerten Verbrauch an Flockungshilfsmitteln.

Ein weiterer Vorteil ergibt sich aus einer vereinfachten Konstruktion der gesamten Anlage, welche jetzt lediglich für die zu reinigende Flüssigkeitsmenge ausgelegt werden muss. Eine Einstellung auf die Menge der zu entfernenden Feststoffe d.h. der zu beherrschenden Festkörperdichte wird über die Menge der rückgeführten Flüssigkeit vorgenommen.

## Patentansprüche

1. Verfahren zum Klären von einer mit Feststoffen beladenen Flüssigkeit **(24)** in einem vertikal stehenden Behälter **(2)** unter Einbringung eines Flockungshilfsmittels, wobei die mit Feststoffen beladene Flüssigkeit an einem Einlaßort **(31a, 31b)** unterhalb eines horizontal liegenden Ringbodens **(19)** eingelassen wird und die sich mit Hilfe des Flockungshilfsmittel im unteren Behälterteil absetzenden Feststoffe an einem Schlammauslassort **(3)** und die gereinigte Flüssigkeit am oberen Behälterrand **(25)** an einem Flüssigkeitsauslaufort **(1)** ausgelassen werden, **dadurch gekennzeichnet, dass** ein Konzentrationsausgleichsflüssigkeitsfluss an einem vorgegebenen Entnahmeort **(35)** innerhalb des Behälters **(2)**, der vom Einlassort **(31a, 31b)** und dem Auslaufort **(3)** distanziert ist, mit mehr oder mit weniger Feststoffen beladene Flüssigkeit entnommen und an einem Zuführort **(27),** bei dem eine andere Feststoffkonzentration als am Entnahmeort **(31)** herrscht, zugegeben wird.

2. Verfahren nach Anspruch 1, **dadurch gekennzeichnet, dass** die Entnahme und wieder Zuführung des Ausgleichsflüssigkeitsflusses innerhalb des Behälters **(2)** an ersten **(31)** und zweiten **(27)**, voneinander distanzierten Orten derart vorgenommen wird, dass ein vertikal verlaufender Feststoffsedimentationsvorgang bis auf eine Strömungstoleranz nicht gestört wird.

3. Verfahren nach Anspruch 1 oder 2, **dadurch gekennzeichnet, dass** der Ausgleichsflüssigkeitsfluss an einer Stelle im Behälter **(2)** mit niedriger Feststoffkonzentration entnommen und insbesondere an einem Ort **(27)** mit hoher Feststoffkonzentration zugegeben wird, wobei insbesondere das Flockungshilfsmittel ebenfalls im Bereich hoher Feststoffkonzentration zugegeben wird.

4. Vorrichtung zur Durchführung des Verfahrens zum Klären von mit Feststoffen beladenen Flüssigkeiten **(24)** nach einem der Ansprüche 1 bis 3 mit einem Behälter **(2)** mit einem Zulaufsystem **(27, 31a, 31b)** für die zu klärende Flüssigkeit und mit einer vertikal verlaufende Behälterwände **(8)** aufweisenden, oberen Kammer **(7)** und mit einer sich nach unten verjüngenden, unteren Kammer **(9)** Kammer, wobei aus einem unteren Bereich der unteren Kammer **(9)** sich absetzende Feststoffe **(5)** auslaßbar sind, und die obere Kammer **(7)** einen nach unten gezogenen Ringboden **(19)** und in ihrem oberen Randbereich einen Flüssigkeitsauslaufort **(1)** für im Behälter **(2)** von Feststoffen geklärte Flüssigkeit hat und unter dem Ringboden **(19)** die zu klärende Flüssigkeit an zwei winkelmässig voneinander distanzierten Einlaßorten **(32a, 32b)** des Zulaufsystems einleitbar ist, **gekennzeichnet durch** ein Flüssigkeitsrückführrohr **(36)**, mit dessen einer Rohreingangsöffnung **(35)** mit mehr oder mit weniger Feststoffen beladene Flüssigkeit an einem Entnahmeort innerhalb des Behälters **(2)** entnehmbar ist und dessen andere Rohrausöffnung in das Zulaufsystem **(27)** eingeführt ist.

5. Vorrichtung nach Anspruch 4, **dadurch gekennzeichnet, dass** die Rohreingangsöffnung **(35)** des Flüssigkeitsrückführrohrs **(36)** an der zu den Einlaßorten **(32a, 32b)** des Zuführrohres bzw. der Zuführrohre **(31a, 31B)** gegenüberliegenden Behälterinnenseite, vorzugsweise bis auf eine Toleranz auf gleichem horizontalen Niveau wie die Einlaßorte **(32a, 32b),** angeordnet ist.

6. Vorrichtung nach Anspruch 4 oder 5, **dadurch gekennzeichnet, dass** das Zulaufsystem **(27, 31a, 31b)** einen im oberen Bereich der oberen Kammer **(7)** angeordneten Einlaufkasten **(27)** hat, der mit den Einlaßorten **(32a, 32b)** unterhalb des Ringbodens **(19)** flüssigkeitsmässig verbunden ist, der Ringboden **(19)** nach unten, einen nach oben abgedeckten Unterraum **(18)** bildend, gezogen ist, die Rohreingangsöffnung **(35)** des Flüssigkeitsrückführrohr **(36)** im Unterraum **(18)** angeordnet ist und die Rohrausgangsöffnung im Einlaufkasten **(27)** liegt, wodurch mit dem Flüssigkeitsrückführsrohr **(36)** einerseits Flüssigkeit absaugbar und der Unterraum **(18)** andererseits entgasbar ist.

7. Vorrichtung nach Anspruch 6, **dadurch gekennzeichnet, dass** das Flüssigkeitsrückführrohr **(36)** innerhalb der oberen Kammer **(7),** vorzugsweise in unmittelbarer Nähe von deren Innenwand geführt ist.

8. Vorrichtung nach einem der Ansprüche 4 bis 7, **dadurch gekennzeichnet, daß** das Zulaufsystem **(27, 31a, 31b)** einen im oberen Bereich der oberen Kammer **(7)**, vorzugsweise mittig, angeordneten Einlaufkasten **(27)** hat, das Zulaufsystem **(29, 31a, 31b)** neben dem Einlaufkasten **(27)** von diesem, insbesondere von dessen Kastenboden **(29),** ausgehend wenigstens ein Zuführrohr **(31a, 31b)** hat, wobei jedes Zuführrohr **(31a, 31b)** eine vertikal verlaufende erste Flüssigkeitsteilzuführung **(30a, 30b)** hat, welche in zwei annähernd horizontal verlaufende zweite Flüssigkeitsteilzuführung **(38a, 38b)** mit je einem Rohrausgang **(32a, 32b)** übergeht, wobei die jeweiligen Rohrausgänge **(32a, 32b)** der zweiten Flüssigkeitsteilzuführungen **(38a, 38b)** am entsprechenden Einlaßort derart enden, dass die austretende Flüssigkeitsflüsse radial entlang der Behälterinnenwand derart fliessen, dass sich die Flussgeschwindigkeit in einem Bereich **(33a, 33b)** aufhebt.

9. Vorrichtung nach Anspruch 8, **dadurch gekennzeichnet, dass** erste, vertikal verlaufende Flüssigkeitsteilzuführung **(38a, 38b)** innerhalb der oberen Kammer **(7)**, vorzugsweise in unmittelbarer Nähe von deren Innenwand, verläuft und insbesondere die erste Flüssigkeitsteilzuführung **(38a, 38b)** ausgehend vom Einlaufkasten **(27)** als zwei voneinander getrennte Rohre **(38a, 38b)** ausgebildet ist.

10. Vorrichtung nach einem der Ansprüche 4 bis 9, **dadurch gekennzeichnet, dass** die Aussenseite **(16)** der sich verjüngenden, unteren Kammer **(9)** beheizbar ist, vorzugsweise die vertikal verlaufende Wand **(8)** der oberen Kammer **(7)** über die unteren Kammer **(9)** als Aussenwand **(15)** bis zur Standfläche **(13)** des Behälters **(2)** nach unten einen Ringraum **(17)** bildend gezogen ist und in bevorzugter Weise der Ringraum **(17)** einen abgeschlossenen Heizraum bildet, der zur Heizung der unteren Kammer **(9)** dient, und insbesondere vom Heizraum **(17)** bis zur Aussenwand des Einlaßkastens ein Steigrohr in der ersten und zweiten Kammer, vorzugsweise in unmittelbarer Nähe der Innenwand der oberen Kammer, geführt ist, durch das aus dem Heizraum warme Luft führbar ist.
